# EUROPEAN PATENT SPECIFICATION

(11) **EP 2 364 849 B1**
(45) Date of publication and mention of the grant of the patent: **19.12.2012**
(21) Application number: 10190011.6
(22) Date of filing: 04.11.2010
(51) Int. Cl.: B32B 37/08, B32B 37/15, B05D 1/26, B05D 3/04, B29C 47/02, B29C 47/88, B05D 7/08, B32B 37/10

(54) **Coating of rigid wood products with thermoplastic polymer**
Beschichtung starrer Holzprodukten mit thermoplastischem Polymer
Revêtement de produits rigides à base de bois avec un polymère thermoplastique

(30) Priority: 05.11.2009 FI 20096140
(43) Date of publication of application: 14.09.2011
(73) Proprietor: Metsäliitto Osuuskunta, 02020 Metsä (FI)
(72) Inventor: Ekman, Jussi, FI-40270 Palokka (FI); Sokka, Kasperi, FI-40520 Jyväskylä (FI); Salmikuukka, Timo, FI-44120 Äänekoski (FI); Holma, Pekka, FI-15150 Lahti (FI); Smått, Rauno, FI-37800 Toijala (FI); Laiho, Erkki, FI-00280 Helsinki (FI); Sainio, Markku, FI-06500 Porvoo (FI); Lindström, Helge, FI-06650 Hamari (FI)
(74) Representative: Laako, Tero Jussi

(56) References cited:
- WO-A1-97/10903
- WO-A1-2010/002764
- US-A- 4 143 187

## Description

The invention relates to a method for coating inflexible board type and predominantly wooden products, which have an averagely planar product top surface and a product bottom surface, as well as a product length and a product width, with a thermoplastic polymer, said method comprising: allowing said coatable product to move in a motion direction consistent with its product length, extruding a molten thermoplastic polymer from a die gap of an extrusion die for a molten coating film which is conducted onto the product top surface of the coatable product by means of a rotating upper roll across a line pressure point at which said molten coating film established by the thermoplastic polymer makes contact with the top surface of the coatable product, said die gap lying at a distance from said line pressure point; allowing said molten coating film to solidify, thus forming a polymer coating in solid form and in attachment with the top surface of the product. The invention relates also to an apparatus for practicing this method.

Patent publication US 4,143,187 discloses a process for laminating an inflexible sheet substrate, such as a panel of wood, with a layer of thermoplastic polymer by an extrusion method in such a way that the molten plastic is extruded onto the product surface by means of an extrusion coating die. In the described apparatus, the extrusion coating die has its die gap opening onto the surface of a product and the panel type product first passes a metal block of the extrusion coater in surface-to-surface contact and then the die gap itself, whereby the panel type product constitutes one lip of the extrusion die gap and the metal block constitutes the other lip of the extrusion die gap, the mutual relationship thereof being adjustable. The molten thermoplastic polymer is then compressed between the metal block and the panel type product as the product is proceeding past the die gap. This is followed by cooling the coating in an open space with an air flow. As preferred polymers, the publication mentions poly-α-olefins, polyamides, polystyrene and polyvinyl chloride. In this process, the oxidation or other similar treatment of extrusible molten plastic is not possible. Patent publication FI-100177 describes a product-coating process, wherein particularly onto the surface of a porous and/or moisture-containing product, such as a wooden board, is conducted a layer of thermoplastic polymer. This molten thermoplastic polymer is conducted onto the product surface from a nozzle presently in contact with the product, whereafter a layer is formed when the product and the cooling and pressing surface of a specific length, located after the nozzle and providing an extension for one edge of the nozzle orifice, are moving relative to each other, whereupon a solidified layer is formed as this advances in contact with the cooling and pressing surface, which surface prevents the material of the layer from expanding after the nozzle in a direction perpendicular to the surface of the coated product, and, at a specific distance from the product surface, determines at the same time the layer thickness. The thus extruded polymer layer is pressed after the nozzle by means of a pressing unit, such as a roll or a set of rolls, which is present at the cooling and compression surface and is separately loaded towards the product surface. According to the process, onto the melt surface can be conducted a gaseous substance through the nozzle for modifying properties of the melt. Hence, in this arrangement, the formation of bubbles in a melt layer on the surface of always moisture-containing wood can be prevented and at the same time, if necessary, properties of the melt can be regulated during the course of extrusion - by means of a gaseous medium - for example to improve adhesion. Accordingly, the arrangement of FI-100177 can be regarded as an improved version of what is disclosed in US 4,143,187. This arrangement enables the production of coatings having a thickness within the range of 0,5 ... 3 mm, i.e. relatively thick layers, since the cooling and pressing surface present as an extension of the nozzle functions as a mold which directly defines the layer thickness. Further in this arrangement, the surface of coatable plywood must be very accurately planar, because a deviation from planarity causes a corresponding deviation in the coating layer thickness. This process of the cited patent publication has also been discussed in a Licentiate thesis by Outi Tervala: "Coating of plywood with thermoplastics" - Tampere University of Technology, Department of Materials Science, Plastics Engineering Laboratory - Aug. 9, 1999, stating, among other things, that the penetrability of a coating into wood pores is worth enhancing by decreasing the melt viscosity of thermoplastic, which is in turn effected by raising its temperature and by shortening the melt contact time. According to this study, the pressure of molten thermoplastic should be maintained as low as possible in order to prevent the molten mass from blocking with its own pressure the porosity existing in wood surface.

Patent publication FI-80637 describes a process for coating plate-like products, such as pieces of wood, with thermoplastic polymer, in which process molten thermoplastic polymer is extruded from the die gap of an extrusion die to a film, which is pressed firmly to the surface of the plate-shaped product by means of a press roller or a non-described press belt, said plate-shaped product being in the longitudinal direction an essentially rigid plate which advances in a single plane. In this process, the die gap of the extrusion die is at an adjustable distance from the surface of the product to be coated and from the place at which the coating web formed by the extruded molten thermoplastic polymer, i.e. the molten film, meets the surface of the product to be coated, thereby allowing oxidation of the thermoplastic polymer before it is pressed firmly to the surface of the plate-shaped product. Regarded as benefits of this process have been the adjustability of a distance from the product surface, as well as the establishment of an oxidation effect in this air gap provided by the extrusion die between the die gap and the product, as well as the possibility of making various laminate coatings, whereby the molten polymer comes along with some previously manufactured film.

Intermediate document WO 2010/002764 A1 discloses a method for coating a wooden product with an extruded thermoplastic polymer film. A roll for conducting the molten film onto the wood product is not disclosed.

An objective of the invention is to provide a method which enables a porous and/or at least moisture-containing product, such as a wooden board, to be coated with a thermoplastic polymer, such that the polymer coating is in a firm attachment with a surface of the product and the polymer coating is as flawless as possible, in other words it would not have, at least to a significant degree, coating defects such as pores or the like, resulting from the effect of moisture evaporating from the heating product during the process. A second objective of the invention is to provide such a method which would enable, if necessary, providing not only relatively thick polymer coatings but also, whenever desirable, relatively thin polymer coatings or coatings less than 0,5 mm in thickness.

In order to solve the foregoing problems and to achieve said objectives, a method of the invention is defined in claim 1, and an apparatus of the invention is defined in claim 8.

The invention will now be described in detail with reference to the accompanying figures.
Fig. 1 shows schematically a first embodiment for an apparatus of the invention in a side view visualized in a direction perpendicular to the motion direction of products.
Fig. 2 shows schematically a second embodiment for an apparatus of the invention in the same view as fig. 1.
Fig. 3 shows part of a group of flow nozzles used in the embodiment of fig. 1 in view perpendicular to their mounting plate, in a direction I in fig. 1.
Fig. 4 shows part of a pressure chamber in a section view perpendicular to the advancing direction of products at a plane II-II in fig. 2.

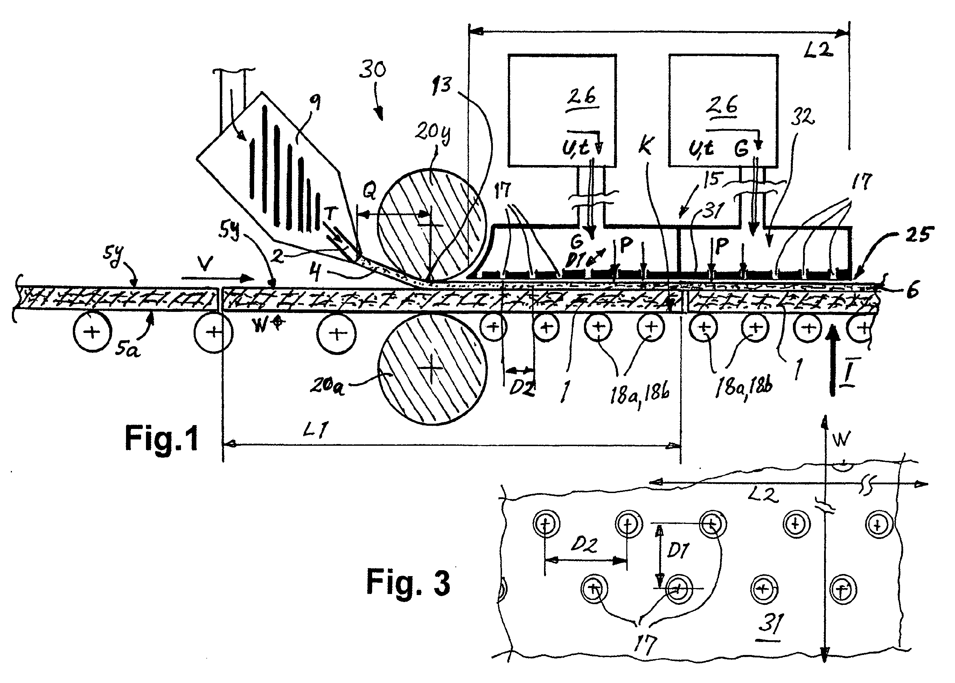

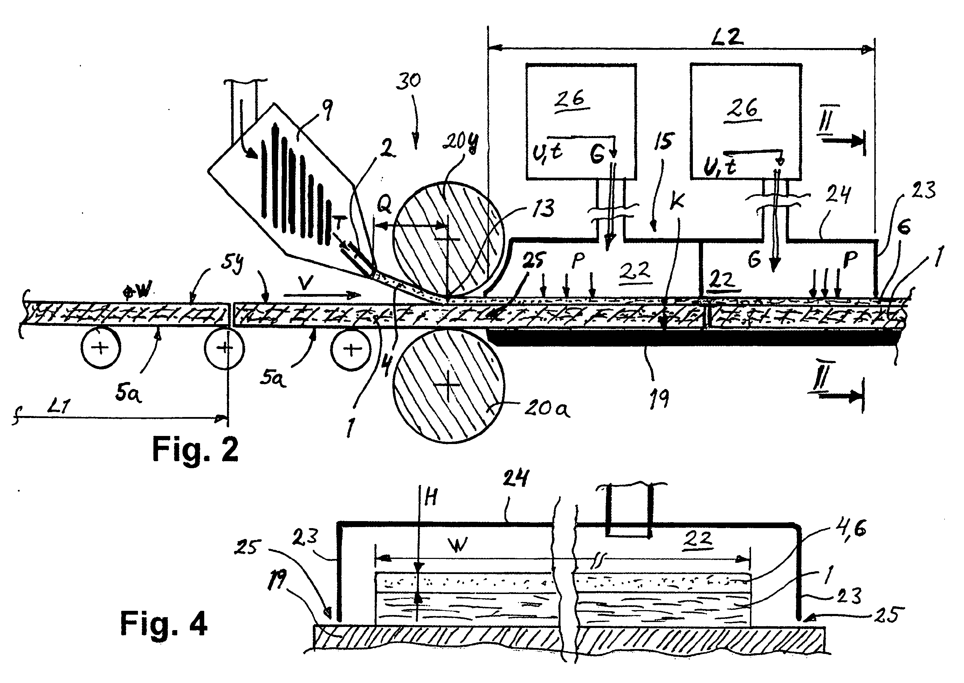

The presently discussed method comprises coating inflexible board type and predominantly wooden products 1 with a thermoplastic polymer, typically with an extrusible thermoplastic polymer. This polymer is in most cases a thermosetting plastic, but may possibly also be a thermoplastic. The products 1, such as plywood boards, wood fiberboards, chipboards or the like, have an averagely planar product top surface 5y and an averagely planar product bottom surface 5a, which are typically parallel to each other, as well as a product length L1 and a product width W. In figs. 1 and 2, this product width W lies perpendicularly to the image plane. In the method, the product to be coated is allowed to move in a motion direction V consistent with its product length L1, first across a plastic or polymer extruding section 30 and then across a cooling section 15, as shown in the figures. Over the extruding section 30, a molten thermoplastic polymer T is extruded from a die gap 2 of an extrusion die 9 for a molten coating film 4 which is conducted onto the product top surface 5y of the coatable product 1 by means of a rotating upper roll 20y across a line pressure point 13. At the line pressure point 13, i.e. at a nip, said molten coating film 4 established by the thermoplastic polymer makes contact with the top surface 5y of the coatable product 1 as the molten coating film is pre-pressed by the upper roll 20y to an attachment with the product top surface. What is explicitly used in this case is such a plastic/polymer extruding practice in which the die gap 2 is spaced at a distance Q from the line pressure point 13, i.e. in which exists a so-called open time. Hence, in this case, the question is specifically about pressing a molten film to an attachment with the surface of a predominantly wooden product, not about continuous mold casting onto the surface of a piece traveling through the mold. Pressing the previously manufactured molten coating film 4 enables also making thin polymer coatings 6 on a surface of the products 1, for example because a thickness H of the coating is readily adjustable and controllable by a gauge of the die gap 2, by an amount of plastic extrusible per unit time, and by a rotating speed of the upper roll 20y and/or a rate of motion of the product in the motion direction V, and by the mutual relationships thereof. In addition, if necessary, the molten coating film 4 can be pretreated chemically or electrically over the extent of this distance Q. In the cooling section 15, this molten coating film 4 is allowed to solidify, thus forming a polymer coating 6 in solid form and in attachment with the top surface of the product.

The underlying principle in a method of the invention is that the cooling section 15 is used for conducting simultaneously both surface pressing the coating film 4 onto the product 1 and cooling the coating film 4 for the solid polymer coating 6. In other words, after the coating film 4 has been brought in molten form into a contact with the product top surface 5y of the coatable product 1, this molten coating film 4 is allowed to cool while in such a surface contact with the product top surface 5y that the coating film and the product's top surface have a sufficient mutual adhesion. The mutual surface contact between the coating film and the product's top surface is sustained by a surface compression directed towards the top surface 5y and provided by a static and/or dynamic pressure load P from a flowing medium G. The surface compression extends over a cooling length L2, whereby the coating film 4 remains pressed against the product top surface 5y. The flowing medium G is also allowed to cool the coating film 4 of thermoplastic polymer from molten form to solid form while - or at the same time as - the surface compression generated by said static and/or dynamic pressure load P is sustained. As a result, the coating film 4 solidifies to an attachment with the product top surface 5y, providing the product 1 with said polymer coating 6. Thus, one and the same, i.e. the flowing medium G sustains both compression of the coating film 4 against the product top surface 5y and solidification/refrigeration of the coating film 4 into the polymer coating 6. The presently discussed static and/or dynamic pressure load P is a positive pressure compared to ambient atmospheric pressure. This static and/or dynamic pressure load P has been chosen in view of being capable of overcoming a separation effect caused by the vaporization of moisture present in the product 1 and by the cooling and/or solidification shrinkage of thermoplastic polymer. What this means is that the static and/or dynamic pressure load P is sufficiently high for preventing the coating film 4 from rising off the product top surface, even though the heat brought into the product by the molten plastic/polymer T attempts to vaporize the moisture, i.e. water, present in the product and thereby attempts to lift the coating film off the product top surface 5y. Hence, the static and/or dynamic pressure load P according to the invention is capable of opposing the vapor pressure of water evaporating from the product and that of other similar evaporating substances, whereby the coating film 4 solidifying from the melt has an adhesion with the product top surface 5y for sufficient attachment. Respectively, the static and/or dynamic pressure load P is sufficiently high for preventing the coating film 4 from rising off the product top surface, even though the coating film shrinkage caused by the cooling and solidification of the molten plastic/polymer T results in dimensional differences between itself and the product and thereby attempts to detach the coating film from the product top surface 5y. As a result, the pressure load maintains the bottom surface of the molten plastic/polymer T in contact with the product top surface 5y, thus enabling a desired adhesion between the plastic/polymer and the product. The flowing medium G consists preferably, yet not necessarily, at least predominantly of air. Air is the most favorable for reasons of cost, even though technically some other gas or gas mixture would also work. In some cases, it may also be possible to use some liquid as the flowing medium G. The moisture content - such as for example relative humidity - of air employed as the flowing medium G can be adjusted by moistening or drying between desired predetermined moisture limit values. The moisture limit values can be determined e.g. experimentally or in any other manner, such as mathematically. An inlet temperature t of the flowing medium G can also be adjusted by heating or cooling between predetermined temperature limit values. It should be appreciated that it is also possible to use untreated air - i.e. air whose moisture or temperature has not been adjusted for this particular purpose - as the flowing medium G as long as a sufficiently high quality polymer coating 6 can be provided on the product 1 thereby. In this respect, the effects of a fan/fans 26 on the air are disregarded. In addition, a flow rate U of the flowing medium G is chosen to be such that the coating film 4 of thermoplastic polymer is thoroughly solidified at a start 27 of the cooling section.

Said static and/or dynamic pressure load P of the flowing medium G is thus a pressure load applied explicitly to the product, which can be a different matter than the static pressure of a chamber possibly present above the product. In the embodiment of fig. 2, the pressure load P consists predominantly of a static pressure, whereby the pressure load P is close to a positive pressure of the flowing medium G existing in a pressure chamber 22. In the embodiment of fig. 1, on the other hand, the pressure load P consists predominantly of a dynamic positive pressure, i.e. a force per unit area, generated by a flow of the flowing medium G coming by way of a plurality of nozzles 17 directed towards the product top surface 5y of the products 1 as such flow impacts the product 1. In most cases, the pressure load P is a combination of a static pressure load and a dynamic pressure load. It is specifically noted that the presently discussed static and/or dynamic pressure load P of the flowing medium G is a positive pressure, i.e. higher than the ambient atmospheric pressure.

In order to provide such a press belt's pressure load P, which is adequately capable of opposing the vapor pressure of water evaporating from the product 1 and that of other corresponding evaporating substances, a reasonably low pressure load P will be sufficient. At present, it is believed that in many cases it is sufficient to use a pressure load P which is less than 0,01 bar or not higher than 0,01 bar. In any event, a satisfactory adhesion between the product's top surface 5y and the film/coating 4, 6 is obtained if the static and/or dynamic pressure load P is not lower than 0,01 bar. It should be noted in selecting/designing the pressure load P that said pressure depends at least on a type of the product 1, a moisture content of the product, a type of plastic/polymer and its extruding temperature, etc.

If necessary, the static and/or dynamic pressure load P can be chosen in view of being also capable of straightening out possible curvatures and distortions in said inflexible and predominantly wooden products 1 as it presses the product bottom surface 5a of said product against supporting rolls 18a or supporting rollers 18b or a flat block 19 or flat blocks establishing a planar supporting platform K. With such a design of the pressure load P, it may be possible to reduce product defects and/or to increase production rate, depending on a type of product and a type of plastic/polymer. To straighten the product 1, in case it is curved or warped, requires in most cases the pressure load P of not lower than 0,03 bar.

The above-described method is applied in a coating apparatus described hereinafter for coating inflexible board type and predominantly wooden products 1 with a thermoplastic polymer, said products thus including a product top surface 5y and a product bottom surface 5a, as well as a product length L1 and a product width W. The coating apparatus comprises in an extruding section 30 at least one extrusion die 9, delivering from its die gap 2 a molten thermoplastic polymer T in the form of a molten coating film 4 having a width that matches the product width W, as well as a rotating upper roll 20y, by means of which the molten coating film 4, issuing from the die gap 2, is conducted onto the product top surface 5y of the coatable product across a line pressure point 13 at which the molten coating film established by the thermoplastic polymer makes contact with the coatable product's top surface 5y. The die gap 2 lies at a distance Q from the line pressure point 13. The coating apparatus further comprises supporting rolls 18a or supporting rollers 18b or a flat block 19 or flat blocks establishing a supporting platform K, said elements enabling the movement of said product 1 in a linear motion direction V, as well as a cooling section 15 in which said molten coating film 4 is allowed to solidify, thus forming a polymer coating 6 in solid form and in attachment with the product's top surface.

In a first embodiment of the coating apparatus according to the invention - such as depicted in fig. 1 - the cooling section 15 comprises a group of flow nozzles 17 for the flowing medium G, which are directed towards the product top surface 5y of the products 1, as well as such flowing medium outlet passages at the cooling section's edge regions 25 that the flow nozzles 17 generate the static and/or dynamic pressure load P of a predetermined magnitude directed towards the product top surface. In a second embodiment of the coating apparatus according to the invention - such as depicted in fig. 2 - the cooling section 15 comprises a pressure chamber 22, which has side walls 23 and a top wall 24 and which is open towards the product top surface 5y of said products 1, and inside which is pressurized a flowing medium G, as well as such flowing medium outlet passages at the cooling section's edge regions 25 that the pressure chamber generates the static and/or dynamic pressure load P of a predetermined magnitude directed towards the product top surface. In addition, the coating apparatus comprises one or more pumps 26, such as a fan or fans, which supplies/supply the flowing medium G to the nozzles 17 or into the pressure chamber 22. In response to a surface compression generated by the thus resulting pressure load P, as already described above, the coating film 4 remains in surface contact with the product top surface 5y at the same time as this coating film of thermoplastic polymer cools from molten form to solid form in response to a flow generated by the replacement of this discussed flowing medium. As a result, the coating film 4 solidifies to a firm attachment with the product top surface 5y providing the product 1 with said polymer coating 6. In the case of flow nozzles 17, these are located at first distances D1 from each other in a lateral direction of the apparatus consistent with the product width W of the products 1, and at second distances D2 from each other in a motion direction V of the products 1 consistent with the product length L1. The purpose is to obtain a sufficiently uniform or homogeneous pressure load P across the cooling section. In the motion direction, the cooling section 15 is immediately downstream of the upper roll 20y, such that there is no time at least for any significant detachment of the coating film 4 from the product top surface 5y to occur.

Underneath the line pressure point 13 the product 1 is preferably supported by a lower roll 20a, against which the product, with its molten coating film 4, is pressed by the upper roll, but the lower roll can be replaced by using a slide support such as an extension of the flat block 19 extending to below the upper roll. Typically at least the upper roll 20y is cooled at least in such a way that it cannot be substantially heated in response to the temperature of the molten coating film 4. Flowthrough water or air is highly suitable for cooling the upper roll, although other cooling practices are also possible. Cooling of the lower roll 20a and/or the flat block 19 is not necessary, yet not harmful either.

The flow nozzles 17 are in attachment with a mounting panel 31 and hence directed towards the product top surface 5y. The flowing medium G is supplied to the flow nozzles 17 by way of a distribution manifold 32 or distribution manifolds as it is probably economically sensible to arrange a plurality of nozzles to receive flowing medium from a common fan 26 or some other source of flowing medium. There are also other possible ways of arranging the supply and distribution of flowing medium to nozzles. It should be noted that the distribution manifold 32 is not the same thing as the pressure chamber 22, as appreciated by a person skilled in the art. It should further be noted that the presently discussed static and/or dynamic pressure load P can be constant or variable along the cooling length L2. For example, the successive distribution manifolds 32 may have either an equal pressure or an unequal pressure. The number of distribution manifolds 32 or, respectively, pressure chambers 22 can be one or more in the motion direction V, and also in a direction transverse to the motion direction there can be one or more distribution manifolds 32 or pressure chambers 22.

## Claims

1. A method for coating inflexible board type and predominantly wooden products (1), which have an averagely planar product top surface (5y) and a product bottom surface (5a), as well as a product length (L1) and a product width (W), with a thermoplastic polymer, said method comprising:
- allowing said coatable product to move in a motion direction (V) consistent with its product length (L1);
- extruding a molten thermoplastic polymer (T) from a die gap (2) of an extrusion die (9) for a molten coating film (4) which is conducted onto the product top surface of the coatable product by means of a rotating upper roll (20y) across a line pressure point (13) at which said molten coating film established by the thermoplastic polymer makes contact with the product top surface (5y), the die gap lying at a distance (Q) from the line pressure point (13);
- allowing said molten coating film (4) to solidify, thus forming a polymer coating (6) in solid form and in attachment with the top surface of the product, whereby, after the coating film (4) in molten form has been brought to contact with said product top surface (5y), the method comprises:
- allowing the molten coating film (4) to be in surface contact with the product top surface (5y), said surface contact being sustained by means of a surface compression generated by a static and/or dynamic pressure load (P) from a flowing medium (G), whereby the coating film (4) remains pressed against the product top surface (5y); and
- allowing said flowing medium (G) to cool the coating film (4) of thermoplastic polymer from molten form to solid form while sustaining the surface compression generated by said static and/or dynamic pressure load (P), whereby the coating film (4) solidifies and becomes attached to the product top surface (5y), thus providing the product (1) with said polymer coating (6).

2. A method according to claim 1, **characterized in that** said static and/or dynamic pressure load (P) is a positive pressure as compared to ambient atmospheric pressure.

3. A method according to claim 2, **characterized in that** said pressure load (P) has been chosen in view of its capability of overcoming a separation effect, which is caused by the vaporization of moisture present in the product (1) and by the solidification shrinkage of thermoplastic polymer and in which the vaporization attempts to lift the coating film off the product top surface (5y), whereby the coating film (4) solidifying from the melt has an adhesion with the product top surface (5y) providing a sufficient attachment.

4. A method according to claim 2 or 3, **characterized in that** said static and/or dynamic pressure load (P) is not lower than 0,01 bar.

5. A method according to claim 2 or 3, **characterized in that** said static and/or dynamic pressure load (P) has been chosen in view of its ability to straighten out possible curvatures and distortions in the inflexible board type and predominantly wooden products (1) as it presses the product bottom surface (5a) of said product against supporting rolls and/or supporting rollers or a flat block (19) or flat blocks establishing a supporting platform (K), and that said pressure load (P) is not lower than 0,03 bar.

6. A method according to any of the preceding claims, **characterized in that** the flowing medium (G) consists of air; and that the moisture content of said air lies between predetermined moisture limit values and the temperature lies between predetermined temperature limit values.

7. A method according to any of the preceding claims, **characterized in that** said static and/or dynamic pressure load (P) is generated by a group of flow nozzles (17) for said medium (G), which are directed towards the product top surface (5y) of said products (1).

8. A coating apparatus for coating inflexible board type and predominantly wooden products (1), which have an averagely planar product top surface (5y) and a product bottom surface (5a), as well as a product length (L1) and a product width (W), with a thermoplastic polymer, said coating apparatus comprising:
- an extrusion die (9) which delivers from its die gap (2) a molten thermoplastic polymer (T) in the form of a molten coating film (4) having a width that matches the product width (W);
- a rotating upper roll (20y), by means of which said molten coating film (4), issuing from the die gap, is conducted onto the product top surface (5y) of the coatable product across a line pressure point (13) at which said molten coating film established by the thermoplastic polymer makes contact with the product top surface (5y) of the coatable product, said die gap (2) lying at a distance (Q) from said line pressure point (13);
- supporting rolls and/or supporting rollers and/or one or more flat blocks (19) establishing a supporting platform (K), said element/elements enabling the movement of said product (1) in a linear motion direction (V); as well as
- a cooling section (15) in which said molten coating film (4) is allowed to solidify, thus forming a polymer coating (6) in solid form and in attachment with the product's top surface,
whereby said cooling section (15) comprises:
- either a pressure chamber (22), which has side walls (23) and a top wall (24) and which is open towards the product top surface (5y) of said products (1), and inside which is pressurized a flowing medium (G), or a group of flow nozzles (17) for the flowing medium (G), which are directed towards the product top surface (5y) of said products (1), as well as such flowing medium outlet passages at the cooling section's edge regions (25) that the pressure chamber or the flow nozzles generate a static and/or dynamic pressure load (P) directed towards the product top surface;
- a pump or pumps (26), which supplies/supply the flowing medium (G) into said pressure chamber or to said nozzles, whereby said coating film (4) remains in surface contact with the product top surface (5y) in response to surface compression generated by said pressure load (P) at the same time as this coating film (4) of thermoplastic polymer cools from molten form to solid form in response to the flowing medium (G) being replaced, whereby the coating film (4) solidifies to an attachment with the product top surface (5y), thus providing the product (1) with said polymer coating (6).

9. A coating apparatus according to claim 8, **characterized in that** said static and/or dynamic pressure load (P) has been chosen in view of its capability of overcoming a separation effect, which is caused by the vaporization of moisture present in the product (1) and by the cooling shrinkage of thermoplastic polymer and in which the vaporization attempts to lift the coating film off the product top surface (5y); and that the flowing medium (G) has been selected to have such a flow rate (U) and an inlet temperature (t) that the coating film (4) of thermoplastic polymer is thoroughly solidified at a start (27) of the cooling section.

10. A coating apparatus according to claim 8, **characterized in that** said flow nozzles (17) are arranged at first distances (D1) in a lateral direction of the apparatus consistent with the product width (W) of the products (1), and at second distances (D2) in a motion direction (V) of the products (1) consistent with the product length (L1); and that said cooling section is immediately downstream of the upper roll (20y) in the motion direction.

11. A coating apparatus according to claim 8, **characterized in that** underneath said line pressure point (13) the product (1) is supported by a rotating lower roll (20a); and that at least the upper roll (20y) is cooled.

## Patentansprüche

1. Verfahren zum Beschichten von starren brettartigen und überwiegend hölzernen Produkten (1), welche eine durchschnittlich ebene Produktoberseitenfläche (5y) und eine Produktunterseitenfläche (5a) sowie eine Produktlänge (L1) und eine Produktbreite (W) aufweisen, mit einem thermoplastischen Polymer, wobei das Verfahren umfasst:
- es dem beschichtbaren Produkt zu erlauben, sich in einer mit seiner Produktlänge (L1) übereinstimmenden Bewegungsrichtung (V) zu bewegen;
- Extrudieren eines geschmolzenen thermoplastischen Polymers (T) von einem Düsenspalt (2) einer Extrusionsdüse (9) für einen geschmolzenen Beschichtungsfilm (4), welcher auf die Produktoberseitenfläche des beschichtbaren Produkts geleitet wird mittels einer rotierenden oberen Rolle (20y) entlang eines Liniendruckpunktes (13), an welchem der aus thermoplastischem Polymer hervorgehende geschmolzene Beschichtungsfilm in Kontakt mit der Produktoberseitenfläche (5y) kommt, wobei der Düsenspalt in einem Abstand (Q) von dem Liniendruckpunkt (13) liegt;
- es dem geschmolzenen Beschichtungsfilm (4) zu erlauben, zu erstarren, wodurch sich eine Polymerbeschichtung (6) in fester Form und in Haftung mit der Oberseitenfläche des Produkts bildet, wobei, nachdem der Beschichtungsfilm (4) in geschmolzener Form in Kontakt mit der Produktoberseitenfläche (5y) gebracht worden ist, das Verfahren umfasst:
- es dem geschmolzenen Beschichtungsfilm (4) zu erlauben, mit der Produktoberseitenfläche (5y) in Flächenkontakt zu stehen, wobei der Flächenkontakt mittels einer Flächenkompression aufrechterhalten wird, welche durch eine statische oder/und dynamische Drucklast (P) von einem strömenden Medium (G) erzeugt wird, wobei der Beschichtungsfilm (4) gegen die Produktoberseitenfläche (5y) gedrückt bleibt; und
- es dem strömenden Medium (G) zu erlauben, den Beschichtungsfilm (4) aus thermoplastischem Polymer von geschmolzener Form zu fester Form abzukühlen, während die durch die statische oder/und dynamische Drucklast (P) erzeugte Flächenkompression aufrechterhalten wird, wobei der Beschichtungsfilm (4) erstarrt und an der Produktoberseitenfläche (5y) zu haften kommt, wodurch das Produkt (1) mit der Polymerbeschichtung (6) bereitgestellt wird.

2. Verfahren nach Anspruch 1, **dadurch gekennzeichnet, dass** die statische oder/und dynamische Drucklast (P) ein positiver Druck ist verglichen mit dem atmosphärischen Umgebungsdruck.

3. Verfahren nach Anspruch 2, **dadurch gekennzeichnet, dass** die Drucklast (P) angesicht ihrer Fähigkeit einen Trennungseffekt zu überwinden, ausgewählt worden ist, welcher verursacht wird durch die Verdampfung von in dem Produkt (1) vorhandener Feuchtigkeit und durch das Erstarrungsschrumpfen von thermoplastischem Polymer und in welchem die Verdampfung bestrebt ist, den Beschichtungsfilm von der Produktoberseitenfläche (5y) abzuheben, wobei der aus der Schmelze erstarrende Beschichtungsfilm (4) eine Adhäsion mit der Produktoberseitenfläche (5y) aufweist, welche für ausreichend Haftung sorgt.

4. Verfahren nach Anspruch 2 oder 3, **dadurch gekennzeichnet, dass** die statische oder/und dynamische Drucklast (P) nicht kleiner als 0,01 bar ist.

5. Verfahren nach Anspruch 2 oder 3, **dadurch gekennzeichnet, dass** die statische oder/und dynamische Drucklast (P) angesichts ihrer Fähigkeit mögliche Krümmungen und Verzerrungen in den starren brettartigen und überwiegend hölzernen Produkten (1) zu glätten, ausgewählt worden ist, wenn sie die Produktunterseitenfläche (5a) des Produkts gegen Stützrollen oder/und Stützwalzen oder einen ebenen Block (19) oder ebene Blöcke, welche/welcher eine Stützplattform (K) bilden, drücken, und dass die Drucklast (P) nicht kleiner als 0,03 bar ist.

6. Verfahren nach einem der vorhergehenden Ansprüche, **dadurch gekennzeichnet, dass** das strömende Medium (G) aus Luft besteht; und dass der Feuchtigkeitsgehalt der Luft zwischen vorbestimmten Feuchtigkeitsgrenzwerten liegt und die Temperatur zwischen vorbestimmten Temperaturgrenzwerten liegt.

7. Verfahren nach einem der vorhergehenden Ansprüche, **dadurch gekennzeichnet, dass** die statische oder/und dynamische Drucklast (P) durch eine Gruppe von Strömungsdüsen (17) für das Medium (G) erzeugt wird, welche zur Produktoberseitenfläche (5y) des Produkts (1) hin ausgerichtet sind.

8. Beschichtungsvorrichtung zum Beschichten von starren brettartigen und überwiegend hölzernen Produkten (1), welche eine durchschnittlich ebene Produktoberseitenfläche (5y) und eine Produktunterseitenfläche (5a) sowie eine Produktlänge (L1) und eine Produktbreite (W) aufweisen, mit einem thermoplastischen Polymer, wobei die Beschichtungsvorrichtung umfasst:
- eine Extrusionsdüse (9), welche von ihrem Düsenspalt (2) ein geschmolzenes thermoplastisches Polymer (T) in der Form eines geschmolzenen Beschichtungsfilms (4) liefert, welcher eine der Produktbreite (W) entsprechende Breite aufweist;
- eine rotierende obere Rolle (20y), mittels welcher der geschmolzene Beschichtungsfilm (4), ausgegeben von dem Düsenspalt, auf die Produktoberseitenfläche (5y) des beschichtbaren Produkts über einen Liniendruckpunkt (13) geleitet wird, an welchem der aus dem thermoplastischen Polymer hervorgehende geschmolzene Beschichtungsfilm in Kontakt mit der Produktoberseitenfläche (5y) des beschichtbaren Produkts kommt, wobei der Düsenspalt (2) in einem Abstand (Q) von dem Liniendruckpunkt (13) liegt;
- Stützrollen oder/und Stützwalzen oder/und einen oder mehrere ebene Blöcke (19), welche/welcher eine Stützplattform (K) bilden, wobei das Teil/die Teile das Bewegen des Produkts (1) in einer linearen Bewegungsrichtung (V) ermöglichen; sowie
- einen Kühlabschnitt (15), in welchem es dem geschmolzenen Beschichtungsfilm (4) erlaubt ist, zu erstarren, wodurch sich eine Polymerbeschichtung (6) in fester Form und in Haftung mit der Produktoberseitenfläche bildet,
wobei der Kühlabschnitt (15) umfasst:
- entweder eine Druckkammer (22), welche Seitenwände (23) und eine obere Wand (24) aufweist und welche zu der Produktoberseitenfläche (5y) des Produkts (1) hin offen ist, und in welcher ein strömendes Medium (G) unter Druck gesetzt ist, oder eine Gruppe von Strömungsdüsen (17) für das strömende Medium (G), welche zur Produktoberseitenfläche (5y) des Produkts (1) hin ausgerichtet sind, sowie solche Ausgabedurchgänge für ein strömendes Medium an den Randbereichen (25) des Kühlabschnitts, so dass die Druckkammer oder die Strömungsdüsen eine statische oder/und dynamische Drucklast (P) erzeugen, welche zur Produktoberseitenfläche hin gerichtet ist;
- eine Pumpe oder Pumpen (26), welche das strömende Medium (G) in die Druckkammer oder die Düsen zuführt/zuführen, wobei der Beschichtungsfilm (4) mit der Produktoberseitenfläche (5y) in Flächenkontakt bleibt als Reaktion auf die von der Drucklast (P) erzeugten Flächenkompression zur gleichen Zeit wie dieser Beschichtungsfilm (4) aus thermoplastischem Polymer sich von geschmolzener Form zu fester Form abkühlt als Reaktion auf das Ersetzen des strömenden Mediums (G), wobei der Beschichtungsfilm (4) in eine Haftung mit der Produktoberseitenfläche (5y) erstarrt, wodurch das Produkt (1) mit der Polymerbeschichtung (6) bereitgestellt wird.

9. Beschichtungsvorrichtung nach Anspruch 8, **dadurch gekennzeichnet, dass** die statische oder/und dynamische Drucklast (P) angesicht ihrer Fähigkeit einen Trennungseffekt zu überwinden, ausgewählt worden ist, welcher verursacht wird durch die Verdampfung von in dem Produkt (1) vorhandener Feuchtigkeit und durch das Erstarrungsschrumpfen von thermoplastischem Polymer and in welchem die Verdampfung bestrebt ist, den Beschichtungsfilm von der Produktoberseitenfläche (5y) abzuheben; und dass das strömende Medium (G) ausgewählt worden ist, um eine solche Strömungsrate (U) und eine solche Einlasstemperatur (t) aufzuweisen, dass der Beschichtungsfilm (4) aus thermoplastischem Polymer vollständig an einem Anfang (27) des Kühlabschnitts erstarrt ist.

10. Beschichtungsvorrichtung nach Anspruch 8, **dadurch gekennzeichnet, dass** die Strömungsdüsen (17) angeordnet sind in ersten Abständen (D1) in einer Längsrichtung der Vorrichtung, welche mit der Produktbreite (W) des Produkts (1) übereinstimmt, und in zweiten Abständen (D2) in einer Bewegungsrichtung (V) des Produkts (1), welche mit der Produktlänge (L1) übereinstimmt; und dass sich der Kühlabschnitt unmittelbar stromabwärts der oberen Rolle (20y) in der Bewegungsrichtung befindet.

11. Beschichtungsvorrichtung nach Anspruch 8, **dadurch gekennzeichnet, dass** unterhalb des Liniendruckpunktes (13) das Produkt (1) von einer rotierenden unteren Rolle (20a) gestützt wird; und dass wenigstens die obere Rolle (20y) gekühlt wird.

## Revendications

1. Un procédé pour revêtir des produits rigides de type planches, formés de façon prédominante de bois, lesdits produits présentant une surface supérieure généralement plane (5y) et une surface inférieure (5a), ainsi qu'une longueur (L1) et une largeur (W), par un polymère thermoplastique, ledit procédé comprenant:
- le fait de permettre au produit susceptible d'être revêtu de se déplacer selon la direction du mouvement (V) en accord avec la longueur du produit (L1);
- l'extrusion d'un polymère thermoplastique fondu (T) par un orifice de filière (2) d'une filière d'extrusion (9) pour former un film de revêtement fondu (4) qui est amené sur la surface supérieure du produit à revêtir au moyen d'un rouleau rotatif supérieur (20y) le long d'un point d'une ligne de pression (13) auquel le film de revêtement fondu formé par le polymère thermoplastique entre en contact avec la surface supérieure (5y) du produit, l'orifice de filière étant disposé à une distance (Q) du point de la ligne de pression (13);
- le fait de permettre audit film de revêtement fondu (4) de se solidifier de façon à former un revêtement polymère (6) sous forme solide et lié à la surface supérieure du produit de façon que, après que le film de revêtement (4) sous forme fondue, ait été mis au contact de la surface supérieure (5y) du produit,
ce procédé consistant:
- à permettre au film de revêtement fondu (4) d'être en contact de surface avec la surface supérieure (5y) du produit, cette surface de contact étant soutenue par une compression de surface produite par une charge de pression dynamique et/ou statique (P) exercée par un milieu fluide (G), de façon que le film de revêtement (4) soit pressé contre la surface supérieure (5y)du produit; et
- à permettre audit milieu fluide (G) de refroidir le film de revêtement (4) de polymère thermoplastique de la forme fondue à la forme solide tout en maintenant la compression de surface générée par ladite charge de pression dynamique et/ou statique (P), de façon que le film de revêtement (4) se solidifie et adhère à la surface supérieure (5y) du produit, ce qui conduit ainsi à l'obtention du produit (1) comprenant ledit revêtement polymère (6).

2. Un procédé selon la revendication 1, **caractérisé en ce que** ladite charge de pression dynamique et/ou statique (P) est une pression positive par comparaison à la pression atmosphérique ambiante.

3. Un procédé selon la revendication 2, **caractérisé en ce que** ladite charge de pression (P) est choisie en vertu de sa capacité à éviter un effet de séparation, pouvant être provoqué par la vaporisation de l'humidité présente dans le produit (1) et par le rétrécissement dû à la solidification du polymère thermoplastique et dans lequel la vaporisation aurait pour effet de séparer par soulèvement le film de revêtement de la surface supérieure (5y) du produit, de façon que le film de revêtement (4) fondu qui se solidifie donne lieu à une adhésion à la surface supérieure (5y) du produit donnant lieu à une liaison efficace.

4. Un procédé selon la revendication 2 ou 3, **caractérisé en ce que** ladite charge de pression dynamique et/ou statique (P) n'est pas inférieure à 0,01 bar.

5. Un procédé selon la revendication 2 ou 3, **caractérisé en ce que** ladite charge de pression dynamique et/ou statique (P) a été choisie en vertu de sa capacité à aplatir certaines plissements et distorsions susceptibles de se produire dans les produits rigides de type planches (1), formés de façon prédominante de bois lorsque la surface inférieure (5a) du produit est pressée contre des rouleaux de support et/ou roulements de support ou un ou plusieurs blocs plats (19) formant une plate-forme de support (K), et ladite charge de pression (P) n'étant pas inférieure à 0,03 bar.

6. Un procédé selon l'une quelconque des revendications précédentes, **caractérisé en ce que** le milieu fluide (G) consiste en air et **en ce que** la teneur en humidité de l'air est située entre des valeurs limites d'humidité prédéterminées et **en ce que** la température est établie entre des valeurs limites de température prédéterminées.

7. Un procédé selon l'une quelconque des revendications précédentes, **caractérisé en ce que** ladite charge de pression dynamique et/ou statique (P) est produite par un groupe de tuyères d'écoulement (17) dudit milieu (G), qui sont dirigées vers la surface supérieure (5y) dudit produit (1).

8. Un dispositif de revêtement pour revêtir des produits rigides de type planches(1), formés de façon prédominante de bois, lesdits produits présentant une surface supérieure généralement plane (5y) et une surface inférieure (5a), ainsi qu'une longueur (L1) et une largeur (W), par un polymère thermoplastique, ledit dispositif de revêtement comprenant
- une filière d'extrusion (9) qui délivre, à partir de son orifice de filière (2) un polymère thermoplastique fondu (T) sous la forme d'un film de revêtement fondu (4) présentant une largeur qui correspond à la largeur du produit (W);
- un rouleau rotatif supérieur (20y) au moyen duquel ledit film de revêtement fondu (4) quittant l'orifice de la filière est amené sur la surface supérieure (5y) du produit susceptible d'être revêtu selon un point d'une ligne de pression (13) auquel ledit film de revêtement fondu formé par le polymère thermoplastique entre en contact avec la surface supérieure (5y) du produit susceptible d'être revêtu, ledit orifice de filière (2) étant disposé à une distance (Q) dudit point-de la ligne de pression (13);
- des rouleaux de support et/ou des roulements de support et/ou un ou plusieurs blocs plats (19) produisant une plate-forme de support (K), ledit élément/lesdits éléments permettant le déplacement dudit produit (1) selon la direction de mouvement linéaire (V); ainsi que
- une section de refroidissement (15) dans laquelle ledit film de revêtement fondu (4) est soumis à une solidification de façon à former un revêtement polymère (6) sous forme solide lié à la surface supérieure du produit,
de façon que ladite section de refroidissement (15) comprenne:
- soit une chambre de pression (22) qui présente des parois latérales (23) et une paroi supérieure (24) et qui est ouverte vers la surface supérieure (5y) desdits produits (1), et à l'intérieur de laquelle est mis sous pression un milieu fluide (G), soit un groupe de tuyères d'écoulement (17) du milieu fluide (G) qui sont dirigées vers la surface supérieure (5y) desdits produits (1), ainsi que des passages de sortie du milieu fluide au niveau des régions de bord des sections de refroidissement (25) de sorte que la chambre de pression ou les tuyères d'écoulement produisent une charge de pression dynamique et/ou statique (P) dirigée vers la surface supérieure du produit;
- une pompe ou des pompes (26) qui fournit/fournissent le milieu fluide (G) dans ladite chambre de pression ou lesdites tuyères de façon que ledit film de revêtement (4) reste en contact de surface avec la surface supérieure (5y) du produit en réponse à toute compression de surface produite par ladite charge de pression (P) simultanément avec le fait que le film de revêtement (4) se refroidit en passant de la forme fondue à la forme solide en réponse à l'action du milieu fluide (G) remplacé, de façon que le film de revêtement (4) se solidifie en se liant à la surface supérieure (5y) du produit, ce qui conduit à fournir le produit (1) comportant ledit revêtement polymère (6).

9. Un dispositif de revêtement selon la revendication 8, **caractérisé en ce que** ladite charge de pression dynamique et/ou statique (P) est choisie en vertu de sa capacité à éviter un effet de séparation, pouvant être provoqué par la vaporisation de l'humidité présente dans le produit (1) et par le rétrécissement dû au refroidissement du polymère thermoplastique et dans lequel la vaporisation aurait pour effet de séparer par soulèvement le film de revêtement de la surface supérieure (5y) du produit, et **en ce que** le milieu fluide (G) a été choisi pour produire un débit (U) et une température d'entrée (t) telle que le film de revêtement (4) de polymère thermoplastique soigneusement solidifié lors de son arrivée (27) dans la section de refroidissement.

10. Un dispositif de revêtement selon la revendication 8, **caractérisé en ce que** lesdites tuyères d'écoulement (17) sont situées à une première distance (D1) dans une direction latérale par rapport à l'appareil en correspondance avec la largeur (W) des produits (1) et à une seconde distance (D2) selon la direction du mouvement (V) des produits en correspondance avec la longueur (L1) du produit, ladite section de refroidissement étant disposée immédiatement en aval du rouleau (20y) selon la direction du mouvement

11. Un dispositif de revêtement selon la revendication 8, **caractérisé en ce que** en dessous dudit point de la ligne de pression (13) le produit (1) soit supporté sur un rouleau de rotation inférieur (20a) et **en ce que** au moins le rouleau supérieur (20y) est refroidi.
